# EUROPEAN PATENT APPLICATION

(11) **EP 4 645 917 A1**
(43) Date of publication of application: **05.11.2025**
(21) Application number: 23910616.4
(22) Date of filing: 26.12.2023
(51) Int. Cl.: H04W 4/16, H04W 36/14, H04W 36/36, H04W 4/48, H04W 88/06

(54) **CALL METHOD AND APPARATUS, AND ELECTRONIC DEVICE**

(30) Priority: 29.12.2022 CN 202211706094
(71) Applicant: Vivo Mobile Communication Co., Ltd., Dongguan, Guangdong 523863 (CN)
(72) Inventor: WANG, Qiang, Dongguan, Guangdong 523863 (CN); MAO, Yuanze, Dongguan, Guangdong 523863 (CN)
(74) Representative: Murgitroyd & Company
(86) International application number: PCT/CN2023/141990
(87) International publication number: WO 2024/140693

(57) **Abstract**

This application discloses a call method, and an electronic device (800, 900). The method includes: in a case that a first call of a first device is transmitted by using radio frequency resources of the first device and that a second call of a second device is transmitted by using radio frequency resources of an in-vehicle device, obtaining (101), by the in-vehicle device, a radio frequency resource handover request message, where the radio frequency resource handover request message is used to indicate that the first call requests to use the radio frequency resources of the in-vehicle device; and handing over (102), by the in-vehicle device, the radio frequency resources of the in-vehicle device to the first device, so that the first call is transmitted by using the radio frequency resources of the in-vehicle device and that the second call is transmitted by using radio frequency resources of the second device.

## Description

### CROSS-REFERENCE TO RELATED APPLICATIONS

This application claims priority to Chinese Patent Application No. 202211706094.5, filed in China on December 29, 2022, which is incorporated herein by reference in its entirety.

### TECHNICAL FIELD

This application pertains to the field of communication technologies, and specifically relates to a call method and apparatus, and an electronic device.

### BACKGROUND

Currently, in a 5G dual-card scenario, user equipment generates relatively high power consumption, leading to significant battery drain. In addition, a secondary data card is restricted by the terminal sharing a single set of radio frequency resources. When the primary card makes a call, the secondary card will be suspended, unable to receive paging, make or receive calls, or perform related data services.

In other words, currently, the user equipment faces a conflict caused by use of radio frequency resources by the primary card and the secondary card because the primary card and the secondary card share a single set of radio frequency resources.

### SUMMARY

An objective of embodiments of this application is to provide a call method and apparatus, and an electronic device to effectively avoid a conflict caused by simultaneous use of radio frequency resources by a primary card and a secondary card in user equipment.

According to a first aspect, some embodiments of this application provide a call method. The method includes:
in a case that a first call of a first device is transmitted by using radio frequency resources of the first device and that a second call of a second device is transmitted by using radio frequency resources of an in-vehicle device, obtaining, by the in-vehicle device, a radio frequency resource handover request message, where the radio frequency resource handover request message indicates that the first call requests to use the radio frequency resources of the in-vehicle device; and
handing over, by the in-vehicle device, the radio frequency resources of the in-vehicle device to the first device, so that the first call is transmitted by using the radio frequency resources of the in-vehicle device and that the second call is transmitted by using radio frequency resources of the second device.

According to a second aspect, some embodiments of this application provide a call method. The method includes:
in a case that a first call of a first device is transmitted by using radio frequency resources of the first device, receiving, by the first device, a second input;
generating, by the first device, a radio frequency resource handover request message in response to the second input, where the radio frequency resource handover request message indicates that the first call requests to use radio frequency resources of an in-vehicle device; and
sending, by the first device, the radio frequency resource handover request message to the in-vehicle device.

According to a third aspect, some embodiments of this application provide a call method. The method includes:
in a case that a second call of a second device is transmitted by using radio frequency resources of an in-vehicle device, obtaining, by the second device, a radio frequency resource handover request message, where the radio frequency resource handover request message indicates that the second call requests to use the radio frequency resources of the in-vehicle device; and
in a case that the radio frequency resource handover request message is sent by the in-vehicle device, sending, by the second device, handover feedback information to the in-vehicle device; or
in a case that the radio frequency resource handover request message is generated by the second device, sending, by the second device, the radio frequency resource handover request message to the in-vehicle device.

According to a fourth aspect, some embodiments of this application provide a call apparatus. The apparatus includes:
a first obtaining module, configured to obtain a radio frequency resource handover request message in a case that a first call of a first device is transmitted by using radio frequency resources of the first device and that a second call of a second device is transmitted by using radio frequency resources of an in-vehicle device, where the radio frequency resource handover request message indicates that the first call requests to use the radio frequency resources of the in-vehicle device; and
a handover module, configured to hand over the radio frequency resources of the in-vehicle device to the first device, so that the first call is transmitted by using the radio frequency resources of the in-vehicle device and that the second call is transmitted by using radio frequency resources of the second device.

According to a fifth aspect, some embodiments of this application provide a call apparatus. The apparatus includes:
a first receiving module, configured to receive a second input in a case that a first call of a first device is transmitted by using radio frequency resources of the first device;
a generation module, configured to generate a radio frequency resource handover request message in response to the second input, where the radio frequency resource handover request message indicates that the first call requests to use radio frequency resources of an in-vehicle device; and
a first sending module, configured to send the radio frequency resource handover request message to the in-vehicle device.

According to a sixth aspect, some embodiments of this application provide a call apparatus. The apparatus includes:
an obtaining module, configured to obtain a radio frequency resource handover request message in a case that a second call of a second device is transmitted by using radio frequency resources of an in-vehicle device, where the radio frequency resource handover request message indicates that the second call requests to use the radio frequency resources of the in-vehicle device;
a first sending module, configured to send handover feedback information to the in-vehicle device in a case that the radio frequency resource handover request message is sent by the in-vehicle device; and
a second sending module, configured to send the radio frequency resource handover request message to the in-vehicle device in a case that the radio frequency resource handover request message is generated by the second device.

According to a seventh aspect, some embodiments of this application provide an electronic device. The electronic device includes a processor and a memory. The memory stores a program or instructions executable on the processor. When the program or instructions are executed by the processor, the steps of the method according to the first aspect, the second aspect, or the third aspect are implemented.

According to an eighth aspect, some embodiments of this application provide a readable storage medium. The readable storage medium stores a program or instructions. When the program or instructions are executed by a processor, the steps of the method according to the first aspect, the second aspect, or the third aspect are implemented.

According to a ninth aspect, some embodiments of this application provide a chip. The chip includes a processor and a communication interface. The communication interface is coupled to the processor. The processor is configured to run a program or instructions to implement the method according to the first aspect, the second aspect, or the third aspect.

According to a tenth aspect, some embodiments of this application provide a program product. The program product is stored in a storage medium. The program product is executed by at least one processor to implement the method according to the first aspect, the second aspect, or the third aspect.

In the embodiments of this application, in the case that the first call of the first device is transmitted by using the radio frequency resources of the first device and that the second call of the second device is transmitted by using the radio frequency resources of the in-vehicle device, the in-vehicle device obtains the radio frequency resource handover request message, where the radio frequency resource handover request message is used to indicate that the first call requests to use the radio frequency resources of the in-vehicle device; and the in-vehicle device hands over the radio frequency resources of the in-vehicle device to the first device, so that the first call is transmitted by using the radio frequency resources of the in-vehicle device and that the second call is transmitted by using the radio frequency resources of the second device. In the foregoing manner, the radio frequency resources of the in-vehicle device can be used in turn by a plurality of user equipments to transmit calls. Because the user equipment can use the radio frequency resources of the in-vehicle device, a conflict caused by simultaneous use of the radio frequency resources by a primary card and a secondary card in a user terminal can be effectively avoided.

### BRIEF DESCRIPTION OF DRAWINGS

FIG. 1 is a flowchart of a call method according to some embodiments of this application;
FIG. 2a is a schematic diagram of an interface of a display screen of an in-vehicle device according to some embodiments of this application;
FIG. 2b is a schematic diagram of an interface of a display screen of an in-vehicle device according to some embodiments of this application;
FIG. 2c is a schematic diagram of an interface of a display screen of a second device according to some embodiments of this application;
FIG. 2d is a schematic diagram of an interface of a display screen of a second device according to some embodiments of this application;
FIG. 2e is a schematic diagram of an interface of a display screen of an in-vehicle device according to some embodiments of this application;
FIG. 2f is a schematic diagram of an interface of a display screen of an in-vehicle device according to some embodiments of this application;
FIG. 3 is a flowchart of a call method according to some embodiments of this application;
FIG. 4 is a flowchart of a call method according to some embodiments of this application;
FIG. 5 is a structural diagram of a call apparatus according to some embodiments of this application;
FIG. 6 is a structural diagram of a call apparatus according to some embodiments of this application;
FIG. 7 is a structural diagram of a call apparatus according to some embodiments of this application;
FIG. 8 is a structural diagram of an electronic device according to some embodiments of this application; and
FIG. 9 is a structural diagram of an electronic device according to some embodiments of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specified order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

A call method provided in some embodiments of this application is hereinafter described in detail by using specific embodiments and application scenarios thereof with reference to the accompanying drawings.

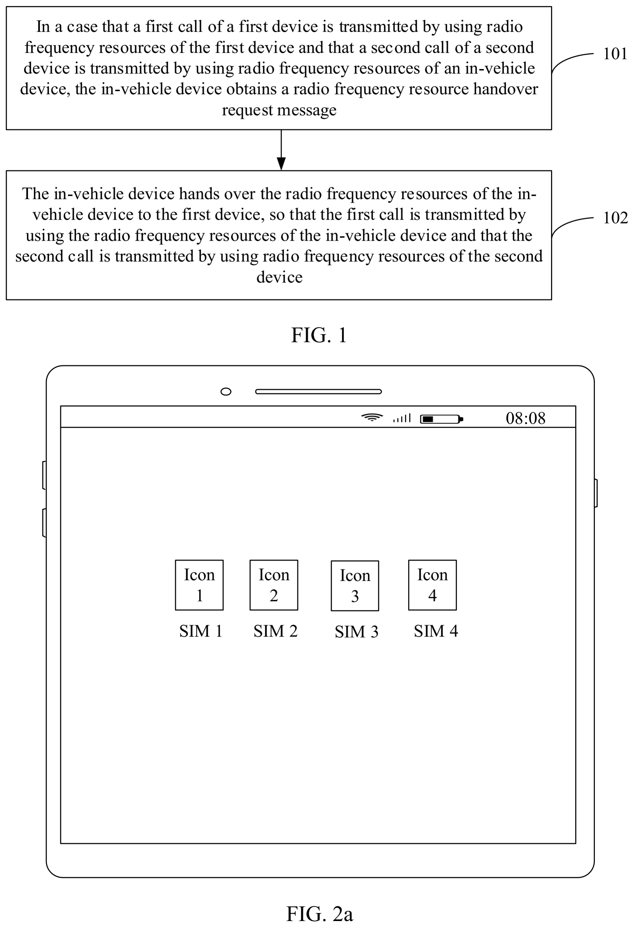

FIG. 1 is a flowchart of a call method according to some embodiments of this application. The call method in this embodiment includes the following steps.

Step 101: In a case that a first call of a first device is transmitted by using radio frequency resources of the first device and that a second call of a second device is transmitted by using radio frequency resources of an in-vehicle device, the in-vehicle device obtains a radio frequency resource handover request message.

The radio frequency resource handover request message is used to indicate that the first call requests to use the radio frequency resources of the in-vehicle device.

The in-vehicle device may be connected to at least two user equipments, and the at least two user equipments include a first device and a second device. For example, user A and user B are in a same vehicle, user A uses the first device, and user B uses the second device. A communication connection between the in-vehicle device and the user equipment may be a Bluetooth connection, or the in-vehicle device and the user equipment may be connected to a same Wi-Fi network or hotspot. As the communication connection between the in-vehicle device and the user equipment is established, and a transmission channel between the in-vehicle device and the user equipment is correspondingly established, information exchanged between the in-vehicle device and the user equipment may be transmitted by using the transmission channel. The user equipment may be a device capable of accommodating a subscriber identity module (Subscriber Identity Module, SIM) card, for example, may be a mobile phone or a tablet computer.

The user equipment may transmit a call by using the radio frequency resources of the in-vehicle device. At a same moment, a call of only one user equipment may be transmitted by using the radio frequency resources of the in-vehicle device. For example, at a same moment, both user A and user B are engaged in a call. However, only the call of the first device used by user A is transmitted by using the radio frequency resources of the in-vehicle device, and the call of the second device used by user B is transmitted by using radio frequency resources of the second device.

Step 102: The in-vehicle device hands over the radio frequency resources of the in-vehicle device to the first device, so that the first call is transmitted by using the radio frequency resources of the in-vehicle device and that the second call is transmitted by using radio frequency resources of the second device.

After receiving the radio frequency resource handover request message, the in-vehicle device may provide the radio frequency resources of the in-vehicle device for use by the first device. In other words, the first call is transmitted by using the radio frequency resources of the in-vehicle device, and the second call is transmitted by using the radio frequency resources of the second device.

In this embodiment, in the case that the first call of the first device is transmitted by using the radio frequency resources of the first device and that the second call of the second device is transmitted by using the radio frequency resources of the in-vehicle device, the in-vehicle device obtains the radio frequency resource handover request message, where the radio frequency resource handover request message is used to indicate that the first call requests to use the radio frequency resources of the in-vehicle device; and the in-vehicle device hands over the radio frequency resources of the in-vehicle device to the first device, so that the first call is transmitted by using the radio frequency resources of the in-vehicle device and that the second call is transmitted by using the radio frequency resources of the second device. Because a personal electronic device is small in size and has a small battery capacity and a limited antenna capability, a dual-card or multi-card device consumes power quickly. In addition, due to limited antenna resources, occasional resource preemption anomalies lead to missed data and calls and affect user experience. In the foregoing manner, the radio frequency resources of the in-vehicle device can be used in turn by a plurality of user equipments to transmit calls. Because the user equipment can use the radio frequency resources of the in-vehicle device, a conflict caused by simultaneous use of the radio frequency resources by a primary card and a secondary card in a user terminal can be effectively avoided. In addition, in this embodiment of this application, a vehicle is used as a communication terminal that can implement interworking and autonomous communication. The vehicle may integrate a function for communication between the in-vehicle device and a mobile phone and tablet, and may leverage a strong communication capability and sufficient energy of the in-vehicle device to partially replace a communication capability of a personal small terminal device such as a mobile phone and tablet, to mitigate a communication lag, a communication capability limitation, and power consumption, thereby improving overall passenger user experience. This embodiment of this application addresses a disadvantage in a scenario in which a conventional in-vehicle device can only be connected to a single terminal having a single embedded SIM (Embedded-SIM, eSIM) card. It implements multi-terminal and multi-eSIM card interactions for in-vehicle incoming calls and procedures thereof, so that all users in the vehicle can use the in-vehicle device to transfer secondary card services, thereby improving network performance for primary cards of the users and reducing impact on power consumption.

In an embodiment of this application, the obtaining a radio frequency resource handover request message includes:
in a case that a first input to the in-vehicle device is received, generating the radio frequency resource handover request message in response to the first input;
   or
receiving the radio frequency resource handover request message sent by the first device or the second device.

Specifically, the in-vehicle device may obtain the radio frequency resource handover request message in two manners. In one manner, a user operates the in-vehicle device. For example, a driver or a passenger performs a first input on a display screen of the in-vehicle device, and the in-vehicle device generates a radio frequency resource handover request message based on the first input. In the other manner, the radio frequency resource handover request message is obtained from the first device or the second device. For example, a holder of the first device operates the first device to trigger generation of the radio frequency resource handover request message, and sends the radio frequency resource handover request message to the in-vehicle device; or a holder of the second device operates the second device to trigger generation of the radio frequency resource handover request message, and sends the radio frequency resource handover request message to the in-vehicle device.

The first input is used to trigger the in-vehicle device to generate the radio frequency resource handover request message, and the first input may be a first operation. For example, the first input includes but is not limited to: a touch input to the display screen of the in-vehicle device by the user by using a touch apparatus such as a finger or a stylus, or a voice instruction entered by the user, or a specific gesture entered by the user, or another feasible input. Specifically, the first input may be determined based on an actual use requirement, and is not limited in this embodiment of the present invention. The specific gesture in this embodiment of this application may be any one of a single-tap gesture, a slide gesture, a drag gesture, a pressure recognition gesture, a long-press gesture, an area change gesture, a double-press gesture, and a double-tap gesture. A tap input in this embodiment of this application may be a single-tap input, a double-tap input, an input of any quantity of taps, or the like, or may be a long-press input or a short-press input. For example, the first input may be a tap input by the user to a handover control displayed on the in-vehicle device.

In the foregoing steps, the radio frequency resource handover request message may be generated by the in-vehicle device, or may be generated by the first device or the second device. In this way, the user can select, based on an actual situation, to trigger the handover of the radio frequency resources by using the in-vehicle device, the first device, or the second device. This facilitates user operations and improves operation convenience.

In another embodiment of this application, that the in-vehicle device hands over the radio frequency resources of the in-vehicle device to the first device includes:
in a case that the radio frequency resource handover request message is generated by the in-vehicle device or that the radio frequency resource handover request message is sent by the first device to the in-vehicle device, the in-vehicle device sends the radio frequency resource handover request message to the second device;
the in-vehicle device receives handover feedback information sent by the second device; and
in a case that the handover feedback information indicates that the second device agrees to hand over the radio frequency resources, the in-vehicle device stops transmission of the second call by using the radio frequency resources of the in-vehicle device, and controls transmission of the second call by using the radio frequency resources of the second device.

Specifically, in this embodiment, if the radio frequency resource handover request message is generated by the in-vehicle device, or the radio frequency resource handover request message is sent by the first device to the in-vehicle device, the in-vehicle device needs to send a radio frequency resource handover request message to the second device, to query whether the second device agrees to the handover. If the second device agrees to the handover, the in-vehicle device performs the handover, specifically: stopping transmission of the second call by using the radio frequency resources of the in-vehicle device, and controlling transmission of the second call by using the radio frequency resources of the second device.

For example, call 1 represents the first call of the first device, call 2 represents the second call of the second device, call 2 proceeds on the in-vehicle device, the first device is mobile phone 1, and the second device is mobile phone 2.

If a call handover control is tapped on the display screen of the in-vehicle device, mobile phone 1, or mobile phone 2, call 1 is handed over to the in-vehicle device, and call 2 is handed over to mobile phone 2.

Case 1: If "Handover" is tapped on mobile phone 1, a call handover process between mobile phone 1 and mobile phone 2 is as follows:
Before step 101, the method further includes step 11: triggering generation of a radio frequency resource handover request message by tapping mobile phone 1, and sending the radio frequency resource handover request message to the in-vehicle device.

After step 101 and before step 102, the method further includes step 12 and step 13. Step 12 includes: after receiving the radio frequency resource handover request message, the in-vehicle device sends a radio frequency resource handover request message to mobile phone 2.

Step 13: After receiving the radio frequency resource handover request message, mobile phone 2 sends handover feedback information to the in-vehicle device, where the handover feedback information may carry a message indicating whether mobile phone 2 agrees to hand over the radio frequency resources.

Step 102 specifically includes step 14: The in-vehicle device receives the handover feedback information from mobile phone 2. If the handover feedback information indicates that mobile phone 2 agrees to hand over the radio frequency resources, the in-vehicle device hands over call 2 to mobile phone 2, and sends a first message to mobile phone 1, where the first message is used to indicate that the radio frequency resources of the in-vehicle device are in an idle state. If the handover feedback information indicates that mobile phone 2 does not agree to hand over the radio frequency resources, the in-vehicle device sends a third message to mobile phone 1, where the third message is used to indicate that the radio frequency resources of the in-vehicle device are in a busy state.

After step 102, the method further includes step 15: If mobile phone 1 receives the first message sent by the in-vehicle device, mobile phone 1 hands over call 1 to the in-vehicle device. The handover in this step may be performed by mobile phone 1 or may be performed by the in-vehicle device. This is not limited herein. If mobile phone 1 receives the third message sent by the in-vehicle device, mobile phone 1 prompts the user that the handover cannot be performed, and call 1 continues to proceed on mobile phone 1.

Case 2: If "handover" is tapped on the in-vehicle device, a call handover process between mobile phone 1 and mobile phone 2 is as follows:
Step 101 specifically includes step 21: The in-vehicle device generates a radio frequency resource handover request message, and sends the radio frequency resource handover request message to mobile phone 2.

After step 101, the method further includes step 22: After receiving the radio frequency resource handover request message, mobile phone 2 sends handover feedback information to the in-vehicle device, where the handover feedback information carries a handover permission state of mobile phone 2. By default, the handover feedback information herein carries a message indicating that mobile phone 2 agrees to hand over the radio frequency resources.

Step 102 specifically includes step 23: The in-vehicle device receives the handover feedback information from mobile phone 2. If the handover feedback information indicates that mobile phone 2 agrees to hand over the radio frequency resources, the in-vehicle device hands over call 2 to mobile phone 2, and sends a first message to mobile phone 1, where the first message is used to indicate that the radio frequency resources of the in-vehicle device are in an idle state. If the handover feedback information indicates that mobile phone 2 does not agree to hand over the radio frequency resources, the in-vehicle device sends a third message to mobile phone 1, where the third message is used to indicate that the radio frequency resources of the in-vehicle device are in a busy state.

After step 102, the method further includes step 24: If mobile phone 1 receives the first message sent by the in-vehicle device, mobile phone 1 hands over call 1 to the in-vehicle device. The handover in this step may be performed by mobile phone 1 or may be performed by the in-vehicle device. This is not limited herein. If mobile phone 1 receives the third message sent by the in-vehicle device, mobile phone 1 prompts the user that the handover cannot be performed, and call 1 continues to proceed on mobile phone 1.

In the foregoing manner, after a plurality of calls are connected, call handover processing may be performed between the in-vehicle device and a plurality of user equipments, so that the user flexibly selects, based on an actual situation, to use the in-vehicle device or the user equipment for the call.

Optionally, that the in-vehicle device hands over the radio frequency resources to the first device includes:
in a case that the radio frequency resource handover request message is sent by the second device to the in-vehicle device, the in-vehicle device stops transmission of the second call by using the radio frequency resources of the in-vehicle device, and controls transmission of the second call by using the radio frequency resources of the second device.

Specifically, if the radio frequency resource handover request message is sent by the second device to the in-vehicle device, the in-vehicle device does not need to query whether the second device agrees to the handover, and the in-vehicle device may directly perform the handover, to improve handover efficiency. For example, user A and user B are in the same vehicle, user A uses the first device, user B uses the second device, and the call of the second device is transmitted by using the radio frequency resources of the in-vehicle device. If user B taps a handover control on the second device, the second device generates a radio frequency resource handover request message, and sends the radio frequency resource handover request message to the in-vehicle device. Because the radio frequency resource handover request message is generated by the second device based on the trigger of the second user, in this case, the in-vehicle device does not need to query whether the second user agrees to the handover, and the handover can be directly performed, thereby improving handover efficiency.

In this embodiment, by performing the foregoing steps, the second device may generate the radio frequency resource handover request message, so that the user flexibly selects, based on an actual situation, the radio frequency resources used for the second call.

In the foregoing description, after the stopping transmission of the second call by using the radio frequency resources of the in-vehicle device, the method further includes:
the in-vehicle device sends a first message to the first device, where the first message is used to indicate that the radio frequency resources of the in-vehicle device are in an idle state, and query whether the first device is to hand over the radio frequency resources;
the in-vehicle device receives a second message sent by the first device; and
in a case that the second message indicates that the handover of the radio frequency resources is determined, the in-vehicle device transmits the first call by using the radio frequency resources of the in-vehicle device.

Specifically, after transmission of the second call by using the radio frequency resources of the in-vehicle device is stopped, the radio frequency resources of the in-vehicle device are in the idle state. In this case, the first device may use the radio frequency resources, and the in-vehicle device sends the first message to the first device, where the first message is used to indicate that the radio frequency resources of the in-vehicle device are in the idle state. After receiving the first message, the first device learns that the radio frequency resources of the in-vehicle device are in the idle state. The first device determines whether to use the radio frequency resources of the in-vehicle device. For example, the first device may send the second message to the in-vehicle device, where the second message is used to instruct to hand over the radio frequency resources. The in-vehicle device transmits the first call by using the radio frequency resources of the in-vehicle device.

In this embodiment, in the foregoing manner, if the radio frequency resources of the in-vehicle device are in the idle state, and the in-vehicle device receives the second message sent by the first device, the in-vehicle device transmits the first call by using the radio frequency resources of the in-vehicle device, thereby effectively avoiding a conflict caused by simultaneous use of the radio frequency resources by a primary card and a secondary card in the first device.

In still another embodiment of this application, before the obtaining a radio frequency resource handover request message, the method further includes:
obtaining first SIM card information of the first device and second SIM card information of the second device;
generating a first virtual card based on the first SIM card information, and generating a second virtual card based on the second SIM card information; and
registering with a target network by using the first virtual card and the second virtual card, where the target network includes a wireless network or a voice network.

Specifically, the SIM card information may include key information, a card number, and the like of the SIM card. The first SIM card may be the primary card or the secondary card in the first device. Similarly, the second SIM card may be a primary card or a secondary card in the second device.

For example, the following steps are a process in which the in-vehicle device obtains the SIM card information and registers with the network based on the SIM card information. The following steps are performed before step 101.

Step 31: After obtaining SIM card information of a secondary card of related user equipment, a vehicle terminal, that is, the in-vehicle device, generates a corresponding virtual SIM card, where the virtual SIM card may be an eSIM card.

Step 32: The vehicle terminal initiates a network attach request message to a base station by using the virtual card, where the network is based on long term evolution (Long Term Evolution, LTE), a 5th Generation (5th Generation, 5G) communication technology, or the like.

Step 33: The base station returns a response message to the vehicle terminal, and the vehicle terminal completes network attachment to an LTE/5G access network or the like.

Step 34: The vehicle terminal sends an authentication and initial registration request message to an IP multimedia subsystem (IP Multimedia Subsystem, IMS) core network.

Step 35: The IMS core network sends a 401 authentication message to the vehicle terminal to complete a registration and authentication process.

Step 36: The vehicle terminal sends a second registration request to the IMS core network.

Step 37: The IMS core network returns a second request response to complete the second registration request.

Step 38: The vehicle terminal sends an IMS service subscription request to the IMS core network.

Step 39: The IMS core network completes IMS service subscription and sends a subscription response message to the vehicle terminal.

In this case, the vehicle terminal has established communication connections with the access network and the IMS core network, and may use a related network service.

It should be noted that steps 31 to 39 need to be performed if the user equipment is connected for the first time; or steps 36 to 39 need to be performed if the user equipment is already connected and is within a reregistration time, generally one hour, where a specific time may be given based on a network requirement. In addition, in a case of attachment to a 2/3G network, only steps 31 to 33 need to be performed.

After sending the first SIM card information to the in-vehicle device, the first device may disable a communication function of the first SIM card in the first device, such as a data network communication function. The second device may also disable a communication function of the second SIM card in the second device in a same processing manner as the first device. After obtaining the first SIM card information and the second SIM card information, the in-vehicle device displays the first SIM card information and the second SIM card information on the display screen of the in-vehicle device. For example, as shown in FIG. 2a, there are four virtual cards in the figure, and each virtual card includes SIM card information of user equipment and an icon. The displayed SIM card information may be a name or a number of a SIM card.

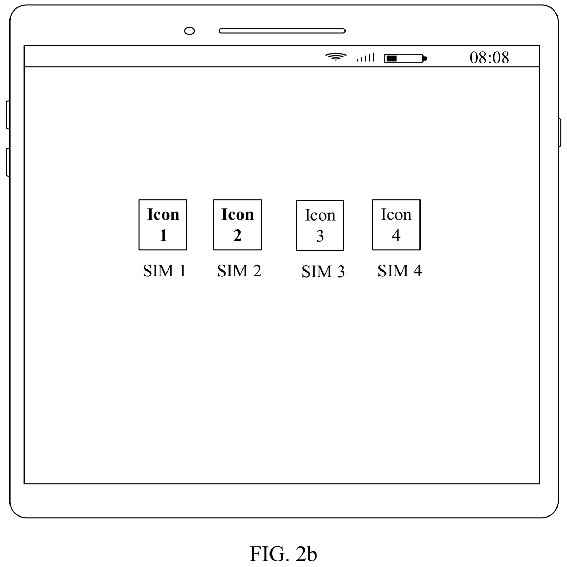

After the communication function of the SIM card is disabled, the user equipment sends a SIM card communication function disable message to the in-vehicle device, where the SIM card communication function disable message carries international mobile subscriber identity (International Mobile Subscriber Identity, IMSI) information of the SIM card. The in-vehicle device receives the SIM card communication function disable message, obtains, through parsing, the IMSI information carried in the message, and displays the corresponding SIM card with display brightness or a font color changed on the in-vehicle device. As shown in FIG. 2b, four virtual cards in the in-vehicle device are presented, where the four virtual cards may be generated based on secondary cards of four electronic devices, communication functions of two virtual cards are in a disabled state, and icons of the virtual cards whose communication functions are in the disabled state are displayed in FIG. 2b in bold, which may be specifically customized by a user.

After the communication function of the SIM card is enabled again, the user equipment sends a SIM card communication function enable message to the in-vehicle device, where the SIM card communication function enable message carries the IMSI information of the SIM card. The in-vehicle device receives the SIM card communication function enable message, obtains, through parsing, the IMSI information carried in the message, and grays out the corresponding SIM card icon or changes the color of the icon, or the like. In a case that a distance between the user equipment and the in-vehicle device is greater than a preset distance, the user terminal disconnects from the in-vehicle device, and a virtual SIM card identifier on the display screen of the in-vehicle device disappears.

In some embodiments of this application, the first SIM card information of the first device and the second SIM card information of the second device are obtained; the first virtual card is generated based on the first SIM card information, and the second virtual card is generated based on the second SIM card information; and registration with the target network is performed by using the first virtual card and the second virtual card, where the target network includes the wireless network or the voice network. SIM card information of a plurality of devices may be copied to the in-vehicle device, so that in a case that a SIM card has a call to be connected subsequently, the radio frequency resources of the in-vehicle device may be used to transmit the call, to avoid a conflict caused by simultaneous use of the radio frequency resources by a primary card and a secondary card in the user equipment.

In some embodiments of this application, after the registering with a target network by using the first virtual card and the second virtual card, and before the obtaining a radio frequency resource handover request message, the method further includes:
displaying an answer interface in a case that an incoming call message of the second virtual card is received, where the answer interface includes a first control and a second control, the first control is configured to transmit the second call by using the radio frequency resources of the in-vehicle device, and the second control is configured to transmit the second call by using the radio frequency resources of the second device; and
forwarding the incoming message to the second device.

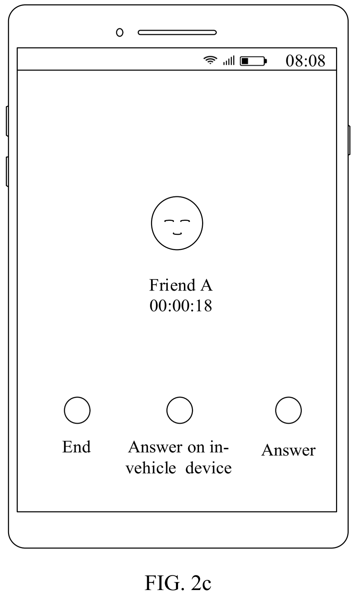

Specifically, in a case that the in-vehicle device receives the incoming call message of the second virtual card, the in-vehicle device forwards the incoming call message to the second device. In this way, the answer interface is displayed simultaneously on the display screen of the in-vehicle device and a display screen of the second device. Displaying of the second device is shown in FIG. 2c, and the user may select an appropriate answer mode based on a requirement.

If the user chooses to transmit the second call by using the radio frequency resources of the in-vehicle device, incoming call information and audio and video data may be directly exchanged between the in-vehicle device and the base station, and a call audio is played on the in-vehicle device. If the user chooses to transmit the second call by using the radio frequency resources of the second device, the in-vehicle device transmits incoming call information and audio and video data to the second device by using a transmission channel between the in-vehicle device and the second device, and a call audio is played on the second device.

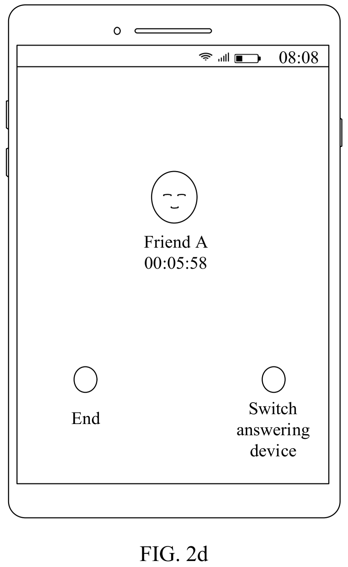

The user may select, based on a scenario requirement, a device for answering the call. In a call process after the user answers the call, the user may also switch, based on a requirement, the device for answering the call. As shown in FIG. 2d, if the user selects "Switch answering device" in the call process, the second call is handed over to the in-vehicle device. After the handover, the audio and video data is also played on the in-vehicle device.

When SIM cards of a plurality of user terminals have incoming calls simultaneously, the following uses two calls as examples for description, and actually, there may be a plurality of calls. When the first call is in progress and the second call is incoming, both the two calls are displayed on the display screen of the in-vehicle device. When the in-vehicle device or the second device is selected to answer the second call, processing is as follows:
When the first call proceeds on the in-vehicle device, if the in-vehicle device is selected to answer the second call, the first call is automatically handed over to the first device for answering, and the in-vehicle device transmits the audio and video data to the first device. In this case, the second call proceeds on the in-vehicle device.

When the first call is answered on the first device, if the in-vehicle device is selected to answer the second call, the second call proceeds on the in-vehicle device. The first call is answered on the first device, the second call is answered on the second device, and the audio and video data is transmitted to the second device.

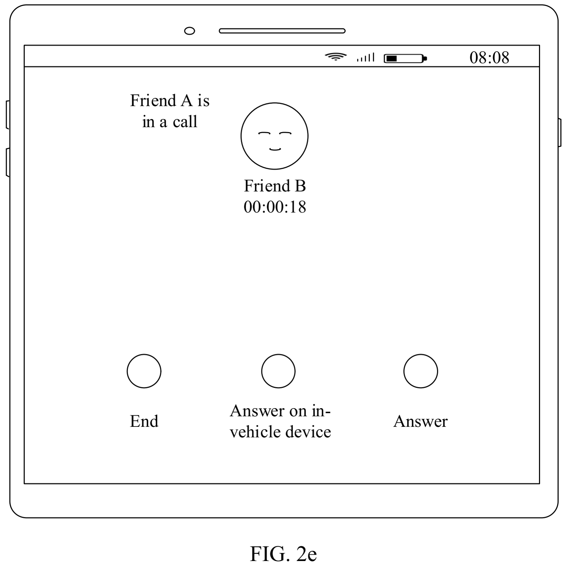

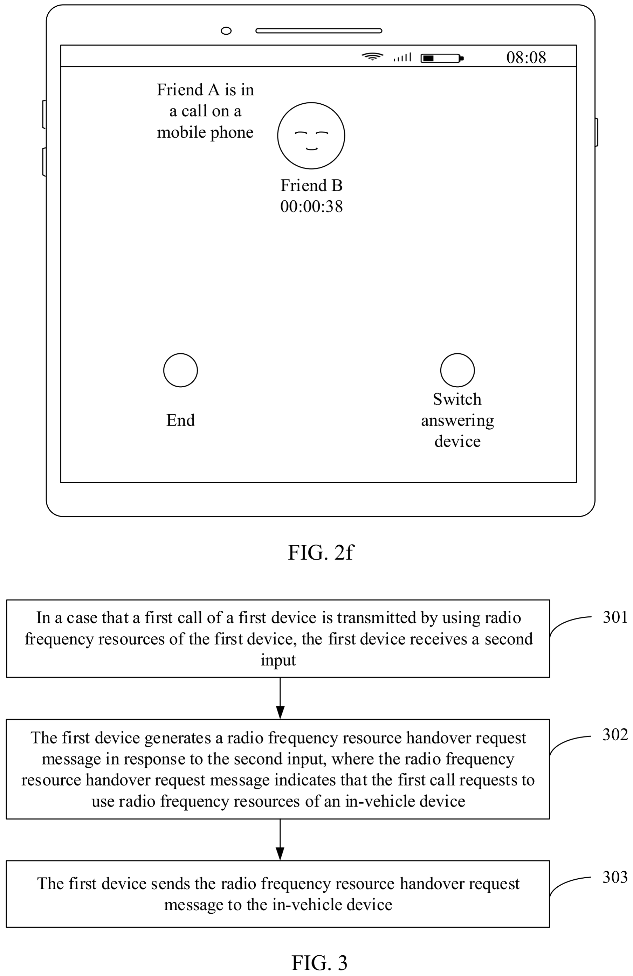

It should be noted that if there are more than two calls, call details of each call may be separately displayed on the user equipment and the in-vehicle device. FIG. 2e shows a display interface of the in-vehicle device or user equipment when the second call (that is, an incoming call of friend B) is incoming, where "Friend A is in a call" is displayed on the interface. FIG. 2f shows a display interface of the in-vehicle device or user equipment after the second call is connected. The second call is transmitted by using the in-vehicle device, and "Friend A is in a call on a mobile phone" is displayed on the interface.

A personal electronic product has a limited communication capability due to factors such as a limited size and power consumption, but the in-vehicle device is large in size and has a strong antenna capability, sufficient power, and a strong communication capability. According to the call method provided in some embodiments of this application, the communication capability of the in-vehicle device may be used to improve the communication capability of the personal electronic device (that is, user equipment). Further, a battery life of the personal electronic device may be enhanced. After the personal electronic device is interconnected with the in-vehicle device, it is no longer necessary to maintain the connected state, so that power saving is achieved. Network disconnection or IMS registration anomalies caused by inability of a primary card or a secondary card in a dual-card single-active terminal to timely access radio frequency resources can be avoided to some extent, and a plurality of user equipments can all transfer primary card or secondary card services by using the in-vehicle device, thereby improving network performance for the user.

FIG. 3 is a flowchart of a call method according to some embodiments of this application. The call method in this embodiment is applied to a first device, and the first device is communicatively connected to an in-vehicle device. The method includes the following steps.

Step 301: In a case that a first call of the first device is transmitted by using radio frequency resources of the first device, the first device receives a second input.

Step 302: The first device generates a radio frequency resource handover request message in response to the second input, where the radio frequency resource handover request message indicates that the first call requests to use radio frequency resources of the in-vehicle device.

The second input is used to trigger the first device to generate the radio frequency resource handover request message, and the second input may be a first operation. For example, the second input includes but is not limited to: a touch input to a display screen of the first device by a user by using a touch apparatus such as a finger or a stylus, or a voice instruction entered by the user, or a specific gesture entered by the user, or another feasible input. Specifically, the second input may be determined based on an actual use requirement, and is not limited in this embodiment of the present invention. The specific gesture in this embodiment of this application may be any one of a single-tap gesture, a slide gesture, a drag gesture, a pressure recognition gesture, a long-press gesture, an area change gesture, a double-press gesture, and a double-tap gesture. A tap input in this embodiment of this application may be a single-tap input, a double-tap input, an input of any quantity of taps, or the like, or may be a long-press input or a short-press input. For example, the second input may be a tap input by the user to a handover control displayed on the first device.

Step 303: The first device sends the radio frequency resource handover request message to the in-vehicle device.

In this embodiment, in the case that the first call of the first device is transmitted by using the radio frequency resources of the first device, the first device receives the second input. The first device generates the radio frequency resource handover request message in response to the second input, where the radio frequency resource handover request message indicates that the first call requests to use the radio frequency resources of the in-vehicle device. The first device sends the radio frequency resource handover request message to the in-vehicle device. Through the foregoing steps, the first device can send the radio frequency resource handover request message to the in-vehicle device. In this way, the in-vehicle device can be used in turn by a plurality of user equipments to transmit calls. Because the first device can use the in-vehicle device, a conflict caused by simultaneous use of the radio frequency resources by a primary card and a secondary card can be effectively avoided.

Optionally, the method further includes:
the first device receives a first message sent by the in-vehicle device, where the first message is used to indicate that the radio frequency resources of the in-vehicle device are in an idle state; and
the first device sends a second message to the in-vehicle device based on the first message, where the second message indicates that the handover of the radio frequency resources is determined.

Specifically, the in-vehicle device notifies the first device by using the first message that the radio frequency resources of the in-vehicle device are in the idle state. In this case, the first device may use the radio frequency resources. If the first device determines to use the radio frequency resources of the in-vehicle device, the first device sends the second message to the in-vehicle device, where the second message is used to instruct to hand over the radio frequency resources. After receiving the second message, the in-vehicle device transmits the first call by using the radio frequency resources of the in-vehicle device.

In this embodiment, in the foregoing manner, the first device can transmit the first call by using the radio frequency resources of the in-vehicle device when the radio frequency resources of the in-vehicle device are in the idle state, thereby effectively avoiding a conflict caused by simultaneous use of the radio frequency resources by a primary card and a secondary card in the first device.

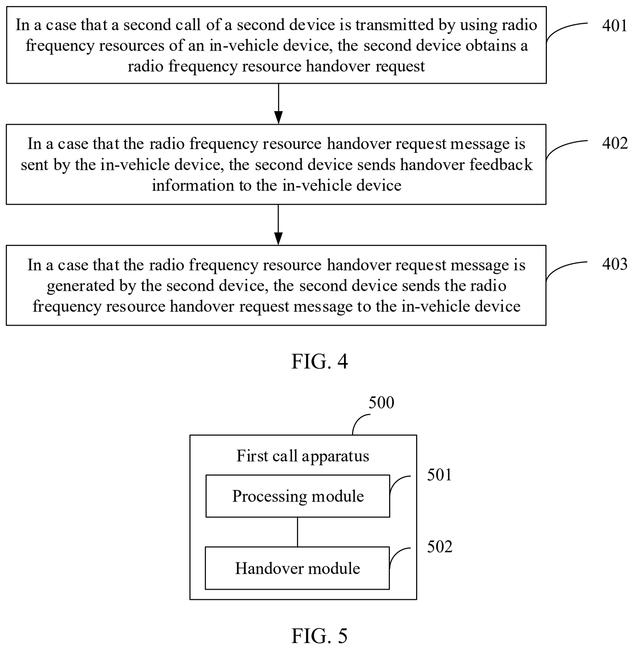

FIG. 4 is a flowchart of a call method according to some embodiments of this application. The call method in this embodiment is applied to a second device, and the second device is communicatively connected to an in-vehicle device. The method includes the following steps.

Step 401: In a case that a second call of the second device is transmitted by using radio frequency resources of the in-vehicle device, the second device obtains a radio frequency resource handover request message, where the radio frequency resource handover request message indicates that the second call requests to use the radio frequency resources of the in-vehicle device.

Step 402: In a case that the radio frequency resource handover request message is sent by the in-vehicle device, the second device sends handover feedback information to the in-vehicle device, where the handover feedback information may be used to indicate that the second device agrees to hand over the radio frequency resources.

Step 403: In a case that the radio frequency resource handover request message is generated by the second device, the second device sends the radio frequency resource handover request message to the in-vehicle device.

In this embodiment, the radio frequency resource handover request message obtained by the second device may be sent by the in-vehicle device, or may be generated by the second device. If the radio frequency resource handover request message is sent by the in-vehicle device, the second device sends the handover feedback information to the in-vehicle device to notify the in-vehicle device that the second device agrees to hand over the radio frequency resources. If the radio frequency resource handover request message is generated by the second device, the second device sends the generated radio frequency resource handover request message to the in-vehicle device, so that the in-vehicle device further hands over the radio frequency resources. Through the foregoing steps, the in-vehicle device can be used in turn by a plurality of user equipments to transmit calls. Because the user equipment can use the in-vehicle device, a conflict caused by simultaneous use of the radio frequency resources by a primary card and a secondary card can be effectively avoided.

Optionally, a user may also perform an operation on the second device to trigger generation of the radio frequency resource handover request message. In other words, the method further includes:
the second device receives a third input; and
the second device generates the radio frequency resource handover request message in response to the third input.

The third input is used to trigger the second device to generate the radio frequency resource handover request message. For example, the third input includes but is not limited to: a touch input to a display screen of the second device by the user by using a touch apparatus such as a finger or a stylus, or a voice instruction entered by the user, or a specific gesture entered by the user, or another feasible input. Specifically, the third input may be determined based on an actual use requirement, and is not limited in this embodiment of the present invention. The specific gesture in this embodiment of this application may be any one of a single-tap gesture, a slide gesture, a drag gesture, a pressure recognition gesture, a long-press gesture, an area change gesture, a double-press gesture, and a double-tap gesture. A tap input in this embodiment of this application may be a single-tap input, a double-tap input, an input of any quantity of taps, or the like, or may be a long-press input or a short-press input. For example, the third input may be a tap input by the user to a handover control displayed on the second device.

In this embodiment, in the foregoing manner, the user may trigger, by using the second device, generation of the radio frequency resource handover request message, so that the in-vehicle device can hand over the radio frequency resources of the in-vehicle device for use. In this way, the in-vehicle device can be used in turn by a plurality of user equipments to transmit calls. Because the user equipment can use the in-vehicle device, a conflict caused by simultaneous use of the radio frequency resources by a primary card and a secondary card can be effectively avoided.

As shown in FIG. 5, an embodiment of this application further provides a call apparatus. A first call apparatus 500 includes:
a processing module 501, configured to obtain a radio frequency resource handover request message in a case that a first call of a first device is transmitted by using radio frequency resources of the first device and that a second call of a second device is transmitted by using radio frequency resources of an in-vehicle device, where the radio frequency resource handover request message indicates that the first call requests to use the radio frequency resources of the in-vehicle device; and
a handover module 502, configured to hand over the radio frequency resources of the in-vehicle device to the first device, so that the first call is transmitted by using the radio frequency resources of the in-vehicle device and that the second call is transmitted by using radio frequency resources of the second device.

Optionally, the processing module 501 is specifically configured to:
in a case that a first input to the in-vehicle device is received, generate the radio frequency resource handover request message in response to the first input;
   or
receive the radio frequency resource handover request message sent by the first device or the second device.

Optionally, the handover module 502 is specifically configured to:
in a case that the radio frequency resource handover request message is generated by the in-vehicle device or that the radio frequency resource handover request message is sent by the first device to the in-vehicle device, send the radio frequency resource handover request message to the second device;
receive handover feedback information sent by the second device; and
in a case that the handover feedback information indicates that the second device agrees to hand over the radio frequency resources, stop transmission of the second call by using the radio frequency resources of the in-vehicle device, and control transmission of the second call by using the radio frequency resources of the second device.

Optionally, the handover module 502 is specifically configured to:
in a case that the radio frequency resource handover request message is sent by the second device to the in-vehicle device, stop transmission of the second call by using the radio frequency resources of the in-vehicle device, and control transmission of the second call by using the radio frequency resources of the second device.

Optionally, the first call apparatus 500 further includes:
a sending module, configured to send a first message to the first device, where the first message is used to indicate that the radio frequency resources of the in-vehicle device are in an idle state;
a receiving module, configured to receive a second message sent by the first device; and
a transmission module, configured to transmit the first call by using the radio frequency resources of the in-vehicle device in a case that the second message indicates that the handover of the radio frequency resources is determined.

Optionally, the processing module 501 is further configured to:
obtain first SIM card information of the first device and second SIM card information of the second device;
generate a first virtual card based on the first SIM card information, and generate a second virtual card based on the second SIM card information; and
register with a target network by using the first virtual card and the second virtual card, where the target network includes a wireless network or a voice network.

The first call apparatus 500 provided in some embodiments of this application is capable of implementing each process implemented in the foregoing method embodiment in FIG. 1. To avoid repetition, details are not described herein again.

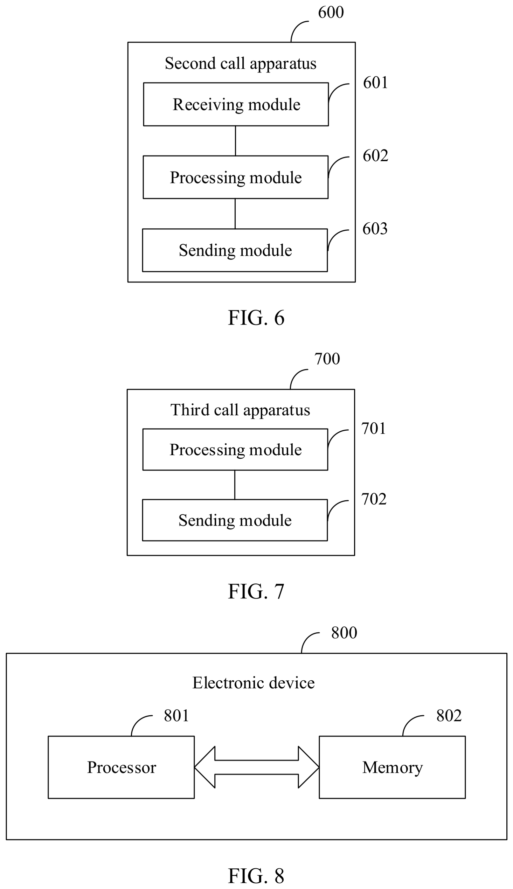

As shown in FIG. 6, an embodiment of this application further provides a call apparatus. A second call apparatus 600 includes:
a receiving module 601, configured to receive a second input in a case that a first call of a first device is transmitted by using radio frequency resources of the first device;
a processing module 602, configured to generate a radio frequency resource handover request message in response to the second input, where the radio frequency resource handover request message indicates that the first call requests to use radio frequency resources of an in-vehicle device; and
a sending module 603, configured to send the radio frequency resource handover request message to the in-vehicle device.

Optionally, the receiving module 601 is further configured to receive a first message sent by the in-vehicle device, where the first message is used to indicate that the radio frequency resources of the in-vehicle device are in an idle state; and
the sending module 603 is further configured to send a second message to the in-vehicle device based on the first message, where the second message indicates that the handover of the radio frequency resources is determined.

The second call apparatus 600 provided in some embodiments of this application is capable of implementing each process implemented in the foregoing method embodiment in FIG. 3. To avoid repetition, details are not described herein again.

As shown in FIG. 7, an embodiment of this application further provides a call apparatus. A third call apparatus 700 includes:
a processing module 701, configured to obtain a radio frequency resource handover request message in a case that a second call of a second device is transmitted by using radio frequency resources of an in-vehicle device, where the radio frequency resource handover request message indicates that the second call requests to use the radio frequency resources of the in-vehicle device; and
a sending module 702, configured to send handover feedback information to the in-vehicle device in a case that the radio frequency resource handover request message is sent by the in-vehicle device, or send the radio frequency resource handover request message to the in-vehicle device in a case that the radio frequency resource handover request message is generated by the second device.

Optionally, the third call apparatus 700 further includes:
a receiving module, configured to receive a third input; and
a generation module, configured to generate the radio frequency resource handover request message in response to the third input.

The third call apparatus 700 provided in some embodiments of this application is capable of implementing each process implemented in the foregoing method embodiment in FIG. 4. To avoid repetition, details are not described herein again.

The first call apparatus 500, the second call apparatus 600, and the third call apparatus 700 in the foregoing embodiments may be electronic devices, or may be components such as integrated circuits or chips in electronic devices. The electronic device may be a terminal, or may be other devices than a terminal. For example, the electronic device may be a mobile phone, a tablet computer, a notebook computer, a palmtop computer, an in-vehicle electronic device, a mobile Internet device (Mobile Internet Device, MID), an augmented reality (Augmented Reality, AR) or virtual reality (Virtual Reality, VR) device, a robot, a wearable device, an ultra-mobile personal computer (Ultra-Mobile Personal Computer, UMPC), a netbook, a personal digital assistant (Personal Digital Assistant, PDA), or the like; or the electronic device may be a server, a network attached storage (Network Attached Storage, NAS), a personal computer (Personal Computer, PC), a television (Television, TV), a teller machine, a self-service machine, or the like. This is not specifically limited in this embodiment of this application.

The first call apparatus 500, the second call apparatus 600, and the third call apparatus 700 in the foregoing embodiments may be apparatuses having an operating system. The operating system may be an Android (Android) operating system, an iOS operating system, or other possible operating systems, and is not specifically limited in this embodiment of this application.

Optionally, as shown in FIG. 8, an embodiment of this application further provides an electronic device 800, including a processor 801 and a memory 802. The memory 802 stores a program or instructions executable on the processor 801. When the program or instructions are executed by the processor 801, the steps of the foregoing embodiment of the call method in FIG. 1, FIG. 3, or FIG. 4 are implemented, with the same technical effect achieved. To avoid repetition, details are not described herein again.

It should be noted that electronic devices in this embodiment of this application include the foregoing mobile electronic device and a nonmobile electronic device.

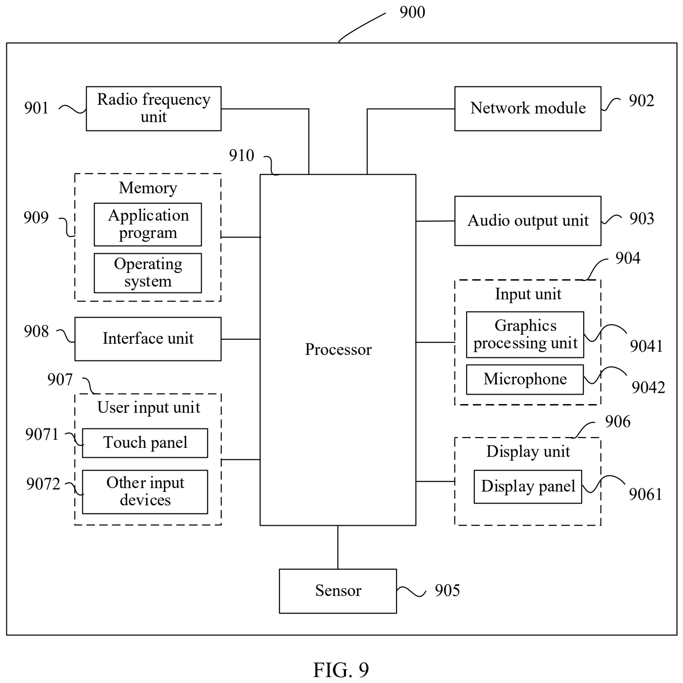

FIG. 9 is a diagram of a hardware structure of an electronic device for implementing an embodiment of this application.

The electronic device 900 includes but is not limited to components such as a radio frequency unit 901, a network module 902, an audio output unit 903, an input unit 904, a sensor 905, a display unit 906, a user input unit 907, an interface unit 908, a memory 909, and a processor 910.

A person skilled in the art may understand that the electronic device 900 may further include a power supply (such as a battery) for supplying power to the components. The power supply may be logically connected to the processor 910 through a power management system. In this way, functions such as charge management, discharge management, and power consumption management are implemented by using the power management system. The structure of the electronic device shown in FIG. 9 does not constitute a limitation on the electronic device. The electronic device may include more or fewer components than those shown in the figure, or some components are combined, or component arrangements are different. Details are not described herein again.

In an embodiment of this application, the processor 910 is configured to:
obtain a radio frequency resource handover request message in a case that a first call of a first device is transmitted by using radio frequency resources of the first device and that a second call of a second device is transmitted by using radio frequency resources of an in-vehicle device, where the radio frequency resource handover request message indicates that the first call requests to use the radio frequency resources of the in-vehicle device; and
hand over the radio frequency resources of the in-vehicle device to the first device, so that the first call is transmitted by using the radio frequency resources of the in-vehicle device and that the second call is transmitted by using radio frequency resources of the second device.

Optionally, in a case that a first input to the in-vehicle device is received, the processor 910 is configured to generate the radio frequency resource handover request message in response to the first input;
or
the radio frequency unit 901 is configured to receive the radio frequency resource handover request message sent by the first device or the second device.

Optionally, the radio frequency unit 901 is configured to: in a case that the radio frequency resource handover request message is generated by the in-vehicle device or that the radio frequency resource handover request message is sent by the first device to the in-vehicle device, send the radio frequency resource handover request message to the second device; and receive handover feedback information sent by the second device; and
the processor 910 is configured to: in a case that the handover feedback information indicates that the second device agrees to hand over the radio frequency resources, stop transmission of the second call by using the radio frequency resources of the in-vehicle device, and control transmission of the second call by using the radio frequency resources of the second device.

Optionally, the processor 910 is configured to: in a case that the radio frequency resource handover request message is sent by the second device to the in-vehicle device, stop transmission of the second call by using the radio frequency resources of the in-vehicle device, and control transmission of the second call by using the radio frequency resources of the second device.

Optionally, the radio frequency unit 901 is configured to: send a first message to the first device, where the first message is used to indicate that the radio frequency resources of the in-vehicle device are in an idle state; receive a second message sent by the first device; and transmit the first call by using the radio frequency resources of the in-vehicle device in a case that the second message indicates that the handover of the radio frequency resources is determined.

Optionally, the processor 910 is configured to: obtain first SIM card information of the first device and second SIM card information of the second device; generate a first virtual card based on the first SIM card information, and generate a second virtual card based on the second SIM card information; and register with a target network by using the first virtual card and the second virtual card, where the target network includes a wireless network or a voice network.

The electronic device provided in some embodiments of this application is capable of implementing each process implemented in the foregoing method embodiment in FIG. 1. To avoid repetition, details are not described herein again.

In another embodiment of this application, the user input unit 907 is configured to receive a second input in a case that a first call of a first device is transmitted by using radio frequency resources of the first device;
the processor 910 is configured to generate a radio frequency resource handover request message in response to the second input, where the radio frequency resource handover request message indicates that the first call requests to use radio frequency resources of an in-vehicle device; and
the radio frequency unit 901 is further configured to send the radio frequency resource handover request message to the in-vehicle device.

Optionally, the radio frequency unit 901 is further configured to: receive a first message sent by the in-vehicle device, where the first message is used to indicate that the radio frequency resources of the in-vehicle device are in an idle state; and send a second message to the in-vehicle device based on the first message, where the second message indicates that the handover of the radio frequency resources is determined.

The electronic device provided in some embodiments of this application is capable of implementing each process implemented in the foregoing method embodiment in FIG. 3. To avoid repetition, details are not described herein again.

In yet another embodiment of this application, the processor 910 is configured to obtain a radio frequency resource handover request message in a case that a second call of a second device is transmitted by using radio frequency resources of an in-vehicle device, where the radio frequency resource handover request message indicates that the second call requests to use the radio frequency resources of the in-vehicle device; and
the radio frequency unit 901 is configured to send handover feedback information to the in-vehicle device in a case that the radio frequency resource handover request message is sent by the in-vehicle device, or send the radio frequency resource handover request message to the in-vehicle device in a case that the radio frequency resource handover request message is generated by the second device.

Optionally, the user input unit 907 is configured to receive a third input; and
the processor 910 is further configured to generate the radio frequency resource handover request message in response to the third input.

The electronic device provided in some embodiments of this application is capable of implementing each process implemented in the foregoing method embodiment in FIG. 4. To avoid repetition, details are not described herein again.

It should be understood that, in this embodiment of this application, the input unit 904 may include a graphics processing unit (Graphics Processing Unit, GPU) 9041 and a microphone 9042. The graphics processing unit 9041 processes image data of a still picture or video obtained by an image capture apparatus (such as a camera) in a video capture mode or an image capture mode. The display unit 906 may include a display panel 9061, and the display panel 9061 may be configured in a form of a liquid crystal display, an organic light-emitting diode, or the like. The user input unit 907 includes at least one of a touch panel 9071 and other input devices 9072. The touch panel 9071 is also referred to as a touchscreen. The touch panel 9071 may include two parts: a touch detection apparatus and a touch controller. The other input devices 9072 may include but are not limited to a physical keyboard, a function button (such as a volume control button or a power button), a trackball, a mouse, and a joystick. Details are not described herein again.

The memory 909 may be configured to store software programs and various data. The memory 909 may primarily include a first storage area for storing programs or instructions and a second storage area for storing data. The first storage area may store an operating system, an application program or instructions required by at least one function (such as an audio play function and an image play function), and the like. In addition, the memory 909 may include a volatile memory or a non-volatile memory, or the memory 909 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 909 in this embodiment of this application includes but is not limited to these and any other suitable types of memories.

The processor 910 may include one or more processing units. Optionally, the processor 910 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 910.

An embodiment of this application further provides a readable storage medium. The readable storage medium stores a program or instructions. When the program or instructions are executed by a processor, each process of the foregoing embodiment of the call method shown in FIG. 1, FIG. 3, or FIG. 4 is implemented, with the same technical effect achieved. To avoid repetition, details are not described herein again.

The processor is a processor in the electronic device in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the call method shown in FIG. 1, FIG. 3, or FIG. 4, with the same technical effect achieved. To avoid repetition, details are not described herein again.

It should be understood that the chip provided in this embodiment of this application may also be referred to as a system-level chip, a system chip, a chip system, a system-on-chip, or the like.

Some embodiments of this application provide a computer program product. The program product is stored in a storage medium, and the program product is executed by at least one processor to implement each process of the foregoing embodiment of the call method shown in FIG. 1, FIG. 3, or FIG. 4, with the same technical effect achieved. To avoid repetition, details are not described herein again.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A call method, wherein the method comprises:
in a case that a first call of a first device is transmitted by using radio frequency resources of the first device and that a second call of a second device is transmitted by using radio frequency resources of an in-vehicle device, obtaining, by the in-vehicle device, a radio frequency resource handover request message, wherein the radio frequency resource handover request message indicates that the first call requests to use the radio frequency resources of the in-vehicle device; and
handing over, by the in-vehicle device, the radio frequency resources of the in-vehicle device to the first device, so that the first call is transmitted by using the radio frequency resources of the in-vehicle device and that the second call is transmitted by using radio frequency resources of the second device.

2. The method according to claim 1, wherein the obtaining a radio frequency resource handover request message comprises:
in a case that a first input to the in-vehicle device is received, generating the radio frequency resource handover request message in response to the first input;
or
receiving the radio frequency resource handover request message sent by the first device or the second device.

3. The method according to claim 1, wherein the handing over, by the in-vehicle device, the radio frequency resources of the in-vehicle device to the first device comprises:
in a case that the radio frequency resource handover request message is generated by the in-vehicle device or that the radio frequency resource handover request message is sent by the first device to the in-vehicle device, sending, by the in-vehicle device, the radio frequency resource handover request message to the second device;
receiving, by the in-vehicle device, handover feedback information sent by the second device; and
in a case that the handover feedback information indicates that the second device agrees to hand over the radio frequency resources, stopping, by the in-vehicle device, transmission of the second call by using the radio frequency resources of the in-vehicle device, and controlling transmission of the second call by using the radio frequency resources of the second device.

4. The method according to claim 1, wherein the handing over, by the in-vehicle device, the radio frequency resources to the first device comprises:
in a case that the radio frequency resource handover request message is sent by the second device to the in-vehicle device, stopping, by the in-vehicle device, transmission of the second call by using the radio frequency resources of the in-vehicle device, and controlling transmission of the second call by using the radio frequency resources of the second device.

5. The method according to claim 3 or 4, wherein after the stopping transmission of the second call by using the radio frequency resources of the in-vehicle device, the method further comprises:
sending, by the in-vehicle device, a first message to the first device, wherein the first message is used to indicate that the radio frequency resources of the in-vehicle device are in an idle state;
receiving, by the in-vehicle device, a second message sent by the first device; and
in a case that the second message indicates that the handover of the radio frequency resources is determined, transmitting, by the in-vehicle device, the first call by using the radio frequency resources of the in-vehicle device.

6. The method according to claim 1, wherein before the obtaining a radio frequency resource handover request message, the method further comprises:
obtaining, by the in-vehicle device, first SIM card information of the first device and second SIM card information of the second device;
generating, by the in-vehicle device, a first virtual card based on the first SIM card information, and generating a second virtual card based on the second SIM card information; and
registering, by the in-vehicle device, with a target network by using the first virtual card and the second virtual card, wherein the target network comprises a wireless network or a voice network.

7. A call method, wherein the method comprises:
in a case that a first call of a first device is transmitted by using radio frequency resources of the first device, receiving, by the first device, a second input;
generating, by the first device, a radio frequency resource handover request message in response to the second input, wherein the radio frequency resource handover request message indicates that the first call requests to use radio frequency resources of an in-vehicle device; and
sending, by the first device, the radio frequency resource handover request message to the in-vehicle device.

8. The method according to claim 7, wherein the method further comprises:
receiving, by the first device, a first message sent by the in-vehicle device, wherein the first message is used to indicate that the radio frequency resources of the in-vehicle device are in an idle state; and
sending, by the first device, a second message to the in-vehicle device based on the first message, wherein the second message indicates that the handover of the radio frequency resources is determined.

9. A call method, comprising:
in a case that a second call of a second device is transmitted by using radio frequency resources of an in-vehicle device, obtaining, by the second device, a radio frequency resource handover request message, wherein the radio frequency resource handover request message indicates that the second call requests to use the radio frequency resources of the in-vehicle device; and
in a case that the radio frequency resource handover request message is sent by the in-vehicle device, sending, by the second device, handover feedback information to the in-vehicle device; or
in a case that the radio frequency resource handover request message is generated by the second device, sending, by the second device, the radio frequency resource handover request message to the in-vehicle device.

10. The method according to claim 9, wherein the method further comprises:
receiving, by the second device, a third input; and
generating, by the second device, the radio frequency resource handover request message in response to the third input.

11. A call apparatus, comprising:
a processing module, configured to obtain a radio frequency resource handover request message in a case that a first call of a first device is transmitted by using radio frequency resources of the first device and that a second call of a second device is transmitted by using radio frequency resources of an in-vehicle device, wherein the radio frequency resource handover request message indicates that the first call requests to use the radio frequency resources of the in-vehicle device; and
a handover module, configured to hand over the radio frequency resources of the in-vehicle device to the first device, so that the first call is transmitted by using the radio frequency resources of the in-vehicle device and that the second call is transmitted by using radio frequency resources of the second device.

12. The apparatus according to claim 11, wherein the processing module is specifically configured to:
in a case that a first input to the in-vehicle device is received, generate the radio frequency resource handover request message in response to the first input;
or
receive the radio frequency resource handover request message sent by the first device or the second device.

13. The apparatus according to claim 11, wherein the handover module is specifically configured to:
in a case that the radio frequency resource handover request message is generated by the in-vehicle device or that the radio frequency resource handover request message is sent by the first device to the in-vehicle device, send the radio frequency resource handover request message to the second device;
receive handover feedback information sent by the second device; and
in a case that the handover feedback information indicates that the second device agrees to hand over the radio frequency resources, stop transmission of the second call by using the radio frequency resources of the in-vehicle device, and control transmission of the second call by using the radio frequency resources of the second device.

14. The apparatus according to claim 11, wherein the handover module is specifically configured to: in a case that the radio frequency resource handover request message is sent by the second device to the in-vehicle device, stop transmission of the second call by using the radio frequency resources of the in-vehicle device, and control transmission of the second call by using the radio frequency resources of the second device.

15. The apparatus according to claim 13 or 14, wherein the apparatus further comprises:
a sending module, configured to send a first message to the first device, wherein the first message is used to indicate that the radio frequency resources of the in-vehicle device are in an idle state;
a receiving module, configured to receive a second message sent by the first device; and
a transmission module, configured to transmit the first call by using the radio frequency resources of the in-vehicle device in a case that the second message indicates that the handover of the radio frequency resources is determined.

16. The apparatus according to claim 11, wherein the processing module is further configured to:
obtain first SIM card information of the first device and second SIM card information of the second device;
generate a first virtual card based on the first SIM card information, and generate a second virtual card based on the second SIM card information; and
register with a target network by using the first virtual card and the second virtual card, wherein the target network comprises a wireless network or a voice network.

17. A call apparatus, comprising:
a receiving module, configured to receive a second input in a case that a first call of a first device is transmitted by using radio frequency resources of the first device;
a processing module, configured to generate a radio frequency resource handover request message in response to the second input, wherein the radio frequency resource handover request message indicates that the first call requests to use radio frequency resources of an in-vehicle device; and
a sending module, configured to send the radio frequency resource handover request message to the in-vehicle device.

18. The apparatus according to claim 17, wherein the receiving module is further configured to receive a first message sent by the in-vehicle device, wherein the first message is used to indicate that the radio frequency resources of the in-vehicle device are in an idle state; and
the sending module is further configured to send a second message to the in-vehicle device based on the first message, wherein the second message indicates that the handover of the radio frequency resources is determined.

19. A call apparatus, comprising:
a processing module, configured to obtain a radio frequency resource handover request message in a case that a second call of a second device is transmitted by using radio frequency resources of an in-vehicle device, wherein the radio frequency resource handover request message indicates that the second call requests to use the radio frequency resources of the in-vehicle device; and
a sending module, configured to send handover feedback information to the in-vehicle device in a case that the radio frequency resource handover request message is sent by the in-vehicle device, or send the radio frequency resource handover request message to the in-vehicle device in a case that the radio frequency resource handover request message is generated by the second device.

20. The apparatus according to claim 19, wherein the apparatus further comprises:
a receiving module, configured to receive a third input; and
a generation module, configured to generate the radio frequency resource handover request message in response to the third input.

21. An electronic device, comprising a processor and a memory, wherein the memory stores a program or instructions executable on the processor, and when the program or instructions are executed by the processor, the steps of the call method according to any one of claims 1 to 6 are implemented.

22. An electronic device, comprising a processor and a memory, wherein the memory stores a program or instructions executable on the processor, and when the program or instructions are executed by the processor, the steps of the call method according to claim 7 or 8 are implemented.

23. An electronic device, comprising a processor and a memory, wherein the memory stores a program or instructions executable on the processor, and when the program or instructions are executed by the processor, the steps of the call method according to claim 9 or 10 are implemented.
